# EUROPÄISCHE PATENTSCHRIFT

(11) **EP 2 662 662 B1**
(45) Veröffentlichungstag und Bekanntmachung des Hinweises auf die Patenterteilung: **18.07.2018**
(21) Anmeldenummer: 13166608.3
(22) Anmeldetag: 06.05.2013
(51) Int. Cl.: G01B 11/08, G01B 5/08, G01B 5/20, G01B 11/24

(54) **Vorrichtung und Verfahren zum Messen von Form-, Lage- und Dimensionsmerkmalen an Maschinenelementen**
Device and method for measuring shape, position and dimension features of machine elements
Dispositif et procédé de mesure de caractéristiques de forme, de position et de dimension sur des éléments de machine

(30) Priorität: 08.05.2012 DE 102012104008
(43) Veröffentlichungstag der Anmeldung: 13.11.2013
(73) Patentinhaber: JENOPTIK Industrial Metrology Germany GmbH, 78056 Villingen-Schwenningen (DE)
(72) Erfinder: Neumann, Ernst, 07616 Bürgel (DE); Schubert, Michael, 07745 Jena (DE)
(74) Vertreter: Freitag, Joachim

(56) Entgegenhaltungen:
- EP-A2- 0 478 898
- WO-A1-2010/133552
- DE-A1- 3 820 241
- DE-A1- 10 319 947

## Beschreibung

Die Erfindung betrifft eine Vorrichtung und ein Verfahren zum Messen von Form-, Lage- und Dimensionsmerkmalen an rotierbaren Maschinenelementen, wie beispielsweise Motor- und Getriebewellen, Schubstangen, Ventilen, Kolben, Schrauben, Turbinenteilen etc.

Für eine genaue Messung von Wellen haben sich taktile Messverfahren etabliert, bei denen Flächen mit mechanischen Tastelementen angetastet und sehr genau gemessen werden können. Taktile Messverfahren erfordern jedoch in der Regel einen hohen Umrüstaufwand bei einem Wechsel der Messaufgabe.

Für diesen Fall bieten sich optische Messverfahren an. Diese erzeugen ein Schattenbild der Welle, an dem der äußere Umriss gemessen werden kann. Aufgrund der berührungslosen Messung kann das Maschinenelement schneller erfasst und hochgenau vermessen werden. Ein Wechsel zwischen verschiedenen Messaufgaben ist einfach und schnell möglich. Ein Nachteil der optischen Messvorrichtungen ist es, dass beispielsweise konkave Teilflächen und Hinterschneidungen, die im Schattenbild nicht sichtbar sind, nicht gemessen werden können.

Aus diesen Gründen bietet es sich an, ein optisches und ein taktiles Messverfahren in einer Vorrichtung zu kombinieren. In der Patentschrift DE 103 19 947 B4 ist eine Vorrichtung offenbart, bei der eine Erfassung von Umfangsflächen von Wellen mittels einer kombinierten Anwendung von optischen und mechanischen Messeinheiten erfolgt. Die Vorrichtung weist dafür ein Messsystem auf, bei dem zur Messung der Welle eine mechanisch-elektrische Messeinheit in einer optoelektronischen Messeinheit integriert ist und im Bedarfsfall linear ausgefahren werden kann. Dabei wird eine Welle an deren Drehachse in der Vorrichtung eingespannt. Das Messsystem verfügt über eine U-förmige optoelektronische Messeinheit, deren freistehenden Enden in einer ersten Messposition zu beiden Seiten der eingespannten Welle angeordnet sind. In den freistehenden Enden sind lichtschrankenartig Beleuchtungs- und Kameramodule eingebaut. Auf bekannte Weise wird so ein Schattenbild der Welle erzeugt und aufgenommen, an dem die Welle vermessen werden kann. Zur vollständigen Erfassung der Welle wird diese dabei um deren Rotationsachse rotiert und die optoelektronische Messeinheit parallel zur Drehachse entlang der Welle verfahren.

Zur Erhöhung der Messgenauigkeit kann dann noch eine zusätzliche Messung der Umfangsflächen der Welle mit der am Grunde der U-förmigen optoelektronischen Messeinheit befestigten mechanisch-elektrischen Messeinheit erfolgen, wie es in der EP 0 478 898 A2 beschrieben wird. Mit der Bewegung der optoelektronischen Messeinheit wird automatisch auch die mechanisch elektrische Messeinheit an die Welle herangeführt, sodass in dieser zweiten Messposition die Umfangsflächen mechanisch angetastet werden können Die Messwertaufnahme erfolgt dabei senkrecht zur Drehachse der Welle innerhalb der Axialebene, sodass mit dem Tastelement die Umfangsflächen mit einer hohen Genauigkeit taktil erfasst werden. Sie ermöglicht aber ausschließlich das genaue mechanische Antasten von Umfangsflächen. Flächen die im Wesentlichen orthogonal zur Drehachse der Welle angeordnet sind, lassen sich damit nur optisch erfassen. Eine in der EP 0 478 898 A2 zusätzlich offenbarte Messoption zur Prüfung der Axiallage von Planflächen oder Welleneinstichen lehrt dann jedoch die Separation der optischen und der mechanischen Messeinheit auf verschiedenen, voneinander getrennt durch jeweilige Vorschubmittel verfahrbare Messschlitten, die zu Genauigkeitseinbußen der Messungen führen oder einen erhöhten Kalibrieraufwand erfordern.

Ferner ist aus der DE 38 20 241 A1 eine Vorrichtung zur Messung von Durchmessern eines Werkstücks bekannt, bei der mehreren beweglichen Schlitten zusätzlich zu einer optischen Messeinrichtung eine Mehrzahl von gegenüberliegenden Längenmesstastern aufweisen, um Durchmesserunterschiede als Messwerte in einem Messrechner zu verarbeiten. Dabei sind jedoch keine Messungen axial ausgerichteter Flächen vorgesehen. In ähnlicher Weise ist auch der in der WO 2010/133552 A1 beschriebene teleskopische dreidimensionale mechanische Messtaster, der auf einer Kugelgelenkbasis schwenkbar ist, ohne jegliche Kombinationsanregung mit einer optischen Messeinrichtung nicht für schnelle und exakte Messungen von rotationsfähigen Messobjekten ausgelegt, sodass er die erfindungsgemäß zu bewältigende Messaufgabe nicht zu erfüllen vermag.

Aufgabe der Erfindung ist es, eine Möglichkeit zum Messen von Form-, Lage- oder Dimensionsmerkmalen eines rotierbaren Maschinenelements zu finden, , die es mit geringem konstruktiven Aufwand und gleichzeitig hoher Präzision ermöglicht, auch Flächen mit einer hohen Messgenauigkeit zu messen, die gegenüber der Rotationsachse eine wesentliche Neigung bis hin zur orthogonalen Ausrichtung zur Rotationsachse aufweisen und verdeckte Bereiche, wie Hinterschneidungen, Steigungen, Unebenheiten usw., aufweisen können.

Erfindungsgemäß wird die Aufgabe bei einer Vorrichtung zum Messen von Form-, Lage- oder Dimensionsmerkmalen eines rotierbaren Maschinenelements, enthaltend ein mechanisch stabiles Maschinenbett mit einer entlang des Maschinenbetts angeordneten Linearführung und einem parallel dazu angeordneten Linearführungssystem, eine Werkstückhalterung zur drehbaren Aufnahme des Maschinenelements um eine Rotationsachse des Maschinenelements, wobei die Werkstückhalterung mindestens ein in der Linearführung aufgenommenes Spannmittel aufweist, um die das Maschinenelement um die Rotationsachse drehbar ist, eine optische Messeinheit mit einem Beleuchtungsmodul und einem Kameramodul, die an einem Linearführungssystem beweglich angeordnet ist und mit der von dem drehbar zwischen Beleuchtungsmodul und gegenüberliegendem Kameramodul angeordneten Maschinenelement zweidimensionale Schattenbilder des Maschinenelements aufnehmbar sind, dadurch gelöst, dass die optische Messeinheit eine zusätzliche mechanische Messeinheit mit einem taktilen Messtaster zum Messen des Maschinenelements in axialer Richtung aufweist, wobei die mechanische Messeinheit an der optischen Messeinheit fixiert ist und eine Schwenkeinrichtung zum Einschwenken des taktilen Messtasters in einer Orthogonalebene zur Rotationsachse des Maschinenelements aufweist.

Vorteilhaft weist der taktile Messtaster einen eindimensionalen, in zwei Richtungen parallel zur Rotationsachse des Maschinenelements messenden Messwertaufnehmer mit einem Tastarm und mindestens einem Tastelement auf, wobei der Tastarm so lang ist, dass das mindestens eine Tastelement beim Einschwenken des taktilen Messtasters einen Kreisbogen beschreibt, der mindestens die Rotationsachse des Maschinenelements durchquert.

Es erweist sich als zweckmäßig, dass der taktile Messtaster einen Tastarm mit zwei in Parallelrichtung zur Rotationsachse des Maschinenelements beabstandeten Tastkugeln aufweist, sodass von umgebendem Material verdeckte Flächen axial messbar sind.

Vorzugsweise ist die Schwenkeinrichtung zur Positionierung der mindestens einen Tastkugel des taktilen Messtasters in einem auf die Rotationsachse bezogenen Radius stufenlos einstellbar.

Der taktile Messtaster ist vorteilhaft durch Bewegung der optischen Messeinheit entlang dem Linearführungssystem in jeder axialer Position des Maschinenelements positionierbar und dadurch ist eine Antastbewegung an axial antastbaren Flächen realisierbar.

Es ist vorteilhaft, wenn ein Kalibrierkörper zur Kalibrierung des taktilen Messtasters in axialer Richtung der Rotationsachse mindestens zwei zur Rotationsachse orthogonale und sich axial gegenüberliegende Referenzflächen aufweist und an der Werkstückhalterung befestigt ist, wobei von dessen Referenzflächen jeweils mindestens eine durch die optische Messeinheit und durch die mechanische Messeinheit abtastbar sind.

Der Kalibrierkörper kann ein U-Profil sein, das zwei parallele Innenflächen aufweist, die als Referenzflächen orthogonal zur Rotationsachse angeordnet sind.

In einer weiteren vorteilhaften Variante kann der Kalibrierkörper ein zur Rotationsachse konzentrisch angeordneter Rotationskörper mit einer umlaufenden Rechtecknut sein, bei dem die sich parallel gegenüberliegenden Innenflächen der Rechtecknut die orthogonal zur Rotationsachse angeordneten Referenzflächen sind, wobei der Rotationskörper konzentrisch an einem Spannmittel fixiert ist.

Vorteilhaft kann die Temperatur des Kalibierkörpers mit Hilfe eines Temperatursensors erfasst und ein gemessenes Längennormal zwischen den Referenzflächen unter Berücksichtigung der Temperaturabhängigkeit des Kalibrierkörpers unter Berücksichtigung seines Wärmeausdehnungskoeffizienten auf eine Bezugstemperatur korrigiert werden.

Des Weiteren wird die Aufgabe bei einem Verfahren zum Messen von Form-, Lage und Dimensionsmerkmalen an rotierbaren Maschinenelementen, gelöst durch die Schritte:
a) Einspannen eines Maschinenelements in mindestens einem drehbaren Spannmittel einer Werkstückhalterung zur Drehung des Maschinenelements um eine Rotationsachse;
b) optisches Messen von Abschnitten des Maschinenelements durch Erfassen von Schattenbildern in einem orthogonal zur Rotationsachse gerichteten Strahlengang einer optischen Messeinheit unter Rotation des Maschinenelements um die Rotationsachse zum Ermitteln von Form-, Lage-, und Dimensionsmerkmalen und von Positionen axial antastbarer Flächen aus den Schattenbildern;
c) Bewegen der optischen Messeinheit zu den von der optischen Messeinheit ermittelten Positionen axial antastbarerer Flächen des Maschinenelements zum Positionieren einer mechanischen Messeinheit mit taktilem Messtaster entsprechend den optisch ermittelten Positionen von axial antastbaren Flächen;
d) taktiles Messen axialer Abstandswerte von sich axial gegenüberliegenden Flächen des Maschinenelements durch Einschwenken eines an die optische Messeinheit gekoppelten taktilen Messtasters in Orthogonalebenen, die den anzutastenden Flächen jeweils gegenüber liegen, durch Antasten dieser Flächen mit dem taktilen Messtaster.
Vorzugsweise erfolgt das taktile Messen sich axial gegenüberliegender und durch Luft voneinander separierter Flächen derart, dass Punkte der sich axial gegenüberliegenden Flächen, welche gleiche radiale Abstände von der Rotationsachse aufweisen mit dem taktilen Messtaster abwechselnd angetastet werden und für jeden gewählten radialen Abstand einen Längenmesswert darstellen, wobei der taktile Messtaster zuvor an einem kalibrierten Längennormal mit zwei sich parallel gegenüberliegenden, orthogonal zur Rotationsachse ausgerichteten Referenzflächen kalibriert wird.

Des Weiteren ist es möglich, das taktile Messen sich axial gegenüberliegender Flächen derart durchzuführen, dass die axiale Position einer der Flächen mit der optischen Messeinheit erfasst wird und die der anderen Fläche mit dem taktilen Messtaster, wobei zuvor die optische Messeinheit und die mechanische Messeinheit zueinander kalibriert werden, indem an einer Referenzfläche ein Offset-Wert zwischen den Messpositionen der optischen Messeinheit und der mechanischen Messeinheit bestimmt wird.

Zweckmäßig ist außerdem, dass in einer oder mehreren zur Rotationsachse konzentrischen Spuren Messwerte des taktilen Messtasters aufgenommen und zur Berechnung von Formmerkmalen verwendet werden, wobei das Maschinenelement um die Rotationsachse gedreht wird.

Vorzugsweise wird das kalibrierte Längennormal für wenigstens einen Kalibrierschritt mindestens vor Beginn des optischen Messens verwendet.

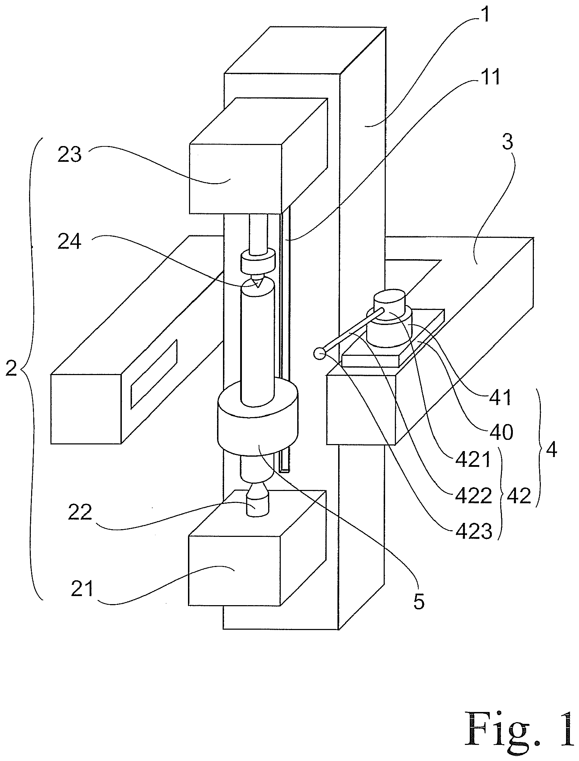

Nachfolgend soll die Erfindung anhand von Ausführungsbeispielen näher erläutert werden. In den zugehörigen Zeichnungen zeigen:
- Fig. 1: eine Darstellung des prinzipiellen Aufbaus der erfindungsgemäßen Vorrichtung in einer Gesamtansicht der Messmaschine;
- Fig. 2a: eine geschnittenen Vorderansicht der optischen Messeinheit kombiniert mit einer mechanischen Messeinheit in Form eines einschwenkbaren taktilen Messtasters;
- Fig. 2b: die kombinierte Messeinheit in einer Draufsicht mit dem taktilen Messtaster während der Einschwenkbewegung;
- Fig. 2c: die kombinierte Messeinheit mit eingeschwenktem taktilen Messtaster in einer Antastbewegung;
- Fig. 2d: die kombinierte Messeinheit mit eingeschwenktem Messtaster beim Antasten einer axial antastbaren Fläche von oben;
- Fig. 3a: das Antasten einer axial antastbaren Fläche mittels des taktilen Messtasters von unten;
- Fig. 3b: das Antasten einer axial antastbaren Fläche von unten mit einem an anderer Stelle der optischen Messeinheit befestigten taktilen Messtaster;
- Fig. 4: ein erstes Beispiel für das Antasten einer schwer zugänglichen axial antastbaren Fläche mit angepasstem Tastelement des taktilen Messtasters;
- Fig. 5: ein zweites Beispiel für das taktile Messen eines axialen Abstandswerts zwischen zwei axial antastbaren Flächen;
- Fig. 6: eine mögliche Variante für die Bestimmung des Offset-Werts zwischen taktilen Messtaster und optischer Messeinheit (Kalibrierung) in einer Vorderansicht und einer Draufsicht der Vorrichtung;
- Fig. 7: eine weitere Variante für das Einmessen des taktilen Messtasters (Kalibrierung) an einem statischen Längennormal;
- Fig. 8: eine weitere Realisierungsform für das Einmessen des taktilen Messtasters (Kalibrierung) an einem rotierenden Längennormal.
Die Vorrichtung ist grundsätzlich wie in Fig. 1 gezeigt aufgebaut. Im Wesentlichen umfasst die Vorrichtung ein mechanisch stabiles Maschinenbett 1, an dem eine Werkstückhalterung 2 und eine optische Messeinheit 3 beweglich angeordnet sind. Die Werkstückhalterung 2 weist, eine Rotationsachse 6 bildend, eine angetriebene Zentrierspitze 22 und eine mitlaufende Zentrierspitze 24 auf, zwischen denen ein Maschinenelement 5 an der Rotationsachse 6 aufnehmbar ist. Dem Maschinenelement 5 beidseitig der Rotationsachse 6 gegenüberliegend ist die optische Messeinheit 3 angeordnet. Zur optischen Messung des Maschinenelements 5 weist die optische Messeinheit 3 auf der einen Seite der Rotationsachse 6 ein Beleuchtungsmodul 31 und auf gegenüberliegend Seite der Rotationsachse 6 ein Kameramodul 33 auf. Einseitig an der optischen Messeinheit 3 ist eine Schwenkeinrichtung 41 fest angeordnet. Die Schwenkeinrichtung 41 weist eine orthogonal zur Rotationsachse 6 schwenkbare mechanische Messeinheit 4 auf.

Die Werkstückhalterung 2 besteht aus einem fest an einem Ende des Maschinenbetts 1 angeordneten Spindelstock 21 und einem beweglich am Maschinenbett 1 angeordneten Reitstock 23. Zur Bewegung des Reitstocks 23 ist am Maschinenbett 1 eine entlang des Maschinenbetts 1 verlaufende Linearführung 11 angebracht. An der Linearführung 11 kann der Reitstock 23 relativ zum Spindelstock 21 bewegt und in einer beliebigen Position fest in der Linearführung 11 verspannt werden. Der Spindelstock 21 ist mit einer drehbaren und angetriebenen Zentrierspitze 22 und der Reitstock 23 mit einer drehbaren und mitlaufenden Zentrierspitze 24 versehen. Die Achsen der angetriebenen Zentrierspitze 22 und der mitlaufenden Zentrierspitze 24 sind koaxial zueinander ausgerichtet. Die angetriebene Zentrierspitze 22 und die mitlaufenden Zentrierspitze 24 weisen zueinander, sodass zwischen ihnen das Maschinenelement 5 an entsprechenden Zentrierbohrungen des Maschinenelements 5 drehbar aufgenommen werden kann. Durch die mitlaufende Zentrierspitze 24 wird eine definierte Kraft auf das Maschinenelement 5 ausgeübt, sodass zwischen der angetriebenen Zentrierspitze 22 und der Zentrierbohrung des Maschinenelements 5 ein Kraftschluss entsteht. Durch den Kraftschluss kann das Maschinenelement 5 von der angetriebenen Zentrierspitze 22 in Rotation versetzt werden. Zur genauen Erfassung der Winkelposition des rotierenden Maschinenelements 5, ist die angetriebenen Zentrierspitze 22 mit einem präzisen Winkelmesssystem (nicht dargestellt) verbunden.

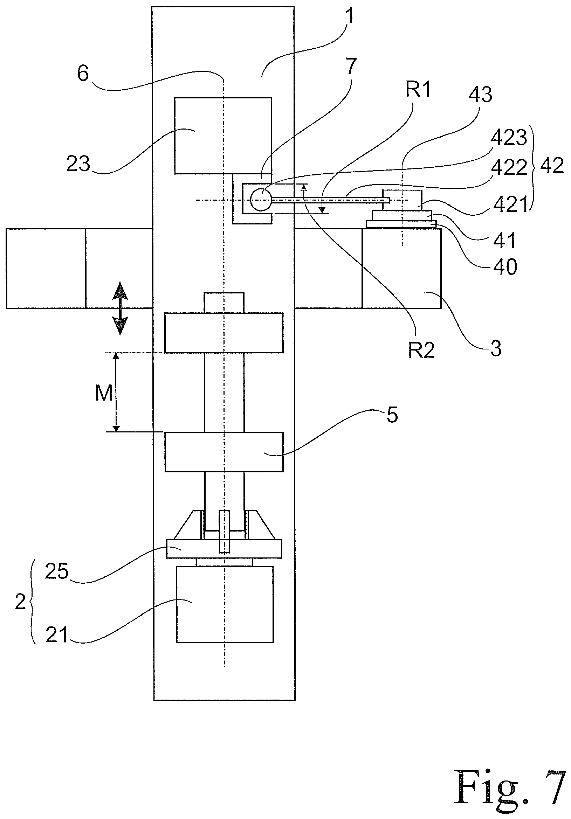

In einer Ausführung der Vorrichtung, kann es auch ausreichend sein, das Maschinenelement 5 nur einseitig am Spindelstock 21 aufzunehmen. Zur Aufnahme ist am Spindelstock 21 wie in Fig. 7 dargestellt ein Backenfutter oder eine Spannzange angebracht, in der das Maschinenelement 5 eingespannt und bei Bedarf auch um die Rotationsachse 6 rotiert werden kann.

Die ebenfalls am Maschinenbett 1 aufgenommene optische Messeinheit 3 ist U-förmig ausgebildet und wird an der Fläche am Grund der U-Form beweglich am Maschinenbett 1 befestigt, sodass die parallelen Schenkel der optischen Messeinheit 3 zu beiden Seiten und senkrecht vom Maschinenbett 1 abstehend orientiert sind. Zur Aufnahme der optischen Messeinheit 3 ist parallel zur Linearführung 11 verlaufend ein Linearführungssystem 12 (in Fig. 1 nicht sichtbar an der Rückseite des Maschinenbetts angeordnet) entlang des Maschinenbetts 1 angebracht. Das Linearführungssystem 12 kann aus zwei parallel verlaufenden, hochgenauen Gleitschienen bestehen. Die Aufnahme der optischen Messeinheit 3 an den Gleitschienen des Linearführungssystems 12 erfolgt über entsprechende Lager, mit denen die optischen Messeinheit 3 entlang des Maschinenbetts 1 bewegt werden kann.

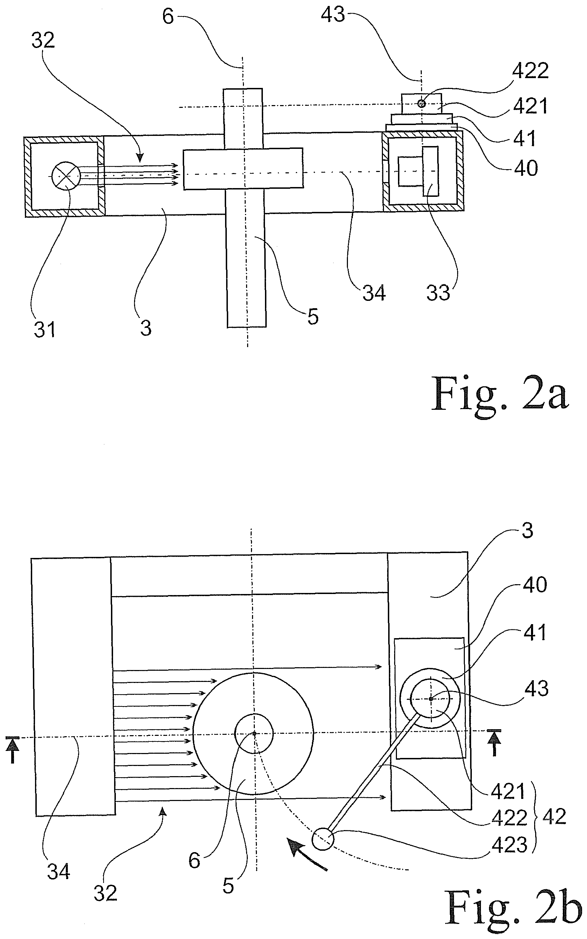

Wie in der Fig. 2a in einer Ansicht von vorn dargestellt, ist zum Durchführen einer optischen Messung in einem Schenkelende der optischen Messeinheit 3 ein Beleuchtungsmodul 31 und in dem anderen Schenkelende der optischen Messeinheit 3 ein Kameramodul 33 integriert. Durch den mechanisch stabilen Aufbau der optischen Messeinheit 3 liegen sich das Beleuchtungsmodul 31 und das Kameramodul 33 auf einer statischen optischen Achse 34 gegenüber, sodass ein von dem Beleuchtungsmodul 31 ausgesendetes Lichtbündel 32 mit dem Kameramodul 33 erfasst werden kann. Das Beleuchtungsmodul 31 und das Kameramodul 33 sind orthogonal und zu beiden Seiten der Werkstückhalterung 2 angeordnet, sodass die Rotationsachse 6 der Werkstückhalterung 2, wie in einer Draufsicht gemäß Fig. 2b dargestellt, etwa mittig im Lichtbündel 32 positioniert ist.

Durch die Bewegung der optischen Messeinheit 3 entlang des Linearführungssystems 12 kann das Lichtbündel 32 der optischen Messeinheit 3 entlang der Rotationsachse 6 der Werkstückhalterung 2 bewegt werden. Das in der Werkstückhalterung 2 aufgenommene Maschinenelement 5 kann somit vollständig erfasst werden. Dazu wird das Maschinenelement 5 mit dem Beleuchtungsmodul 31 beleuchtet und ein entstehendes Schattenbild mit dem Kameramodul 33 aufgenommen. Aus dem Schattenbild kann eine zweidimensionale Kontur des Maschinenelements 5 erzeugt werden, die zur Berechnung von messtechnischen Größen des Maschinenelements 5 wie beispielsweise Längen, Durchmesser, Parallelitäten, Geradheiten, Winkeln oder Radien verwendet werden kann.

Es ist auch möglich die optische Messeinheit 3 unbewegt zu belassen und das Maschinenelement 5 um die Rotationsachse 6 zu bewegen. Unter gleichzeitigem Erfassen der Winkelposition des um die Rotationsachse 6 drehenden Maschinenelements 5 kann eine Kontur des Maschinenelements 5 in einer zur Rotationsachse 6 parallelen Schnittebene erfasst und daraus verschiedenen messtechnische Größen wie rotationswinkelabhängige Position, Rundlauf und Rundheit berechnet werden. Aus der Kombination mehrerer solcher Konturen können weitere messtechnische Größen wie beispielsweise Zylinderform, Koaxialität und Gesamtrundlauf berechnet werden.

Zusätzlich zur optischen Messeinheit 3 weist die Vorrichtung die mechanische Messeinheit 4 auf. Wie in Fig. 1 dargestellt, besteht die mechanische Messeinheit 4 aus der Schwenkeinrichtung 41, die über eine stabile Grundplatte 40 fest mit einem der Schenkel der optischen Messeinheit 3 verbunden ist. An der Schwenkeinrichtung 41 ist ein taktiler Messtaster 42 befestigt, der aus einem Messwertaufnehmer 421 mit einem Tastarm 422 und einem den Tastarm 422 abschließenden Tastelement 423 aufgebaut ist. Wie in der Fig. 2b in der Ansicht von oben gezeigt, kann die Schwenkeinrichtung 41 zusammen mit dem taktilen Messtaster 42 eine stufenlose Schwenkbewegung um eine parallel zur Rotationsachse 6 angeordnete Schwenkachse 43 ausführen. Der taktile Messtaster 42 ist dabei mit seinem Tastarm 422 orthogonal zur Schwenkachse 43 angeordnet, sodass dieser zwischen einer außerhalb und einer innerhalb des Maschinenelements 5 befindlichen Position jede Zwischenposition einnehmen kann.

Wie in den Fig. 2a bis 2d bei der Antastung einer vollständig orthogonal zu Rotationsachse 6 orientierten Fläche des Maschinenelements 5 gezeigt, ist die mechanische Messeinheit 4 ausschließlich zum Messen von axial antastbaren Flächen des Maschinenelements 5 ausgelegt. Der taktile Messtaster 42 ist deshalb als ein eindimensionaler Messtaster ausgeführt, dessen Tastarm 422 sich parallel zur Rotationsachse 6 in beiden Richtungen auslenken lässt. Somit können axial antastbare Flächen in beiden Richtungen der Rotationsachse 6 angetastet und vermessen werden. Sowohl die Positionierung der mechanischen Messeinheit 4 entlang der Rotationsachse 6 als auch die Antastbewegung der mechanischen Messeinheit 4 an axial antastbare Flächen des Maschinenelements 5 erfolgt durch die Bewegung der optischen Messeinheit 3. Gegenüber Messungen mit der optischen Messeinheit 3 kann mit der mechanischen Messeinheit 4 besonders bei der Messung von Ebenheit, Planlauf, Rechtwinkligkeit und von Abstandswerten M orthogonal zur Rotationsachse ausgerichteter Flächen des Maschinenelements 5 eine wesentlich höhere Genauigkeit erreicht werden.

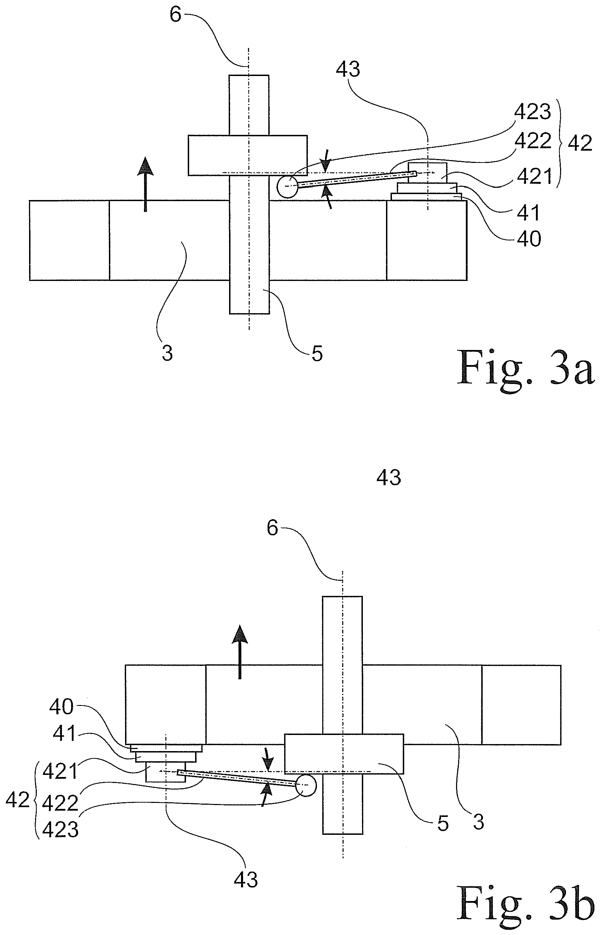

Wie in Fig. 3a und Fig. 3b anhand zweier beispielhafter Positionen gezeigt, kann die Anbringung der Schwenkeinrichtung 41 an verschiedenen Stellen der optischen Messeinheit 3 erfolgen. In den Figuren ist die Messung ein und der selben axial antastbaren Fläche mit zwei unterschiedlich positionierten mechanischen Messeinheiten 4 dargestellt. Die Schwenkeinrichtung 41 kann sowohl an der dem Spindelstock 21, als auch an der dem Reitstock 23 zugewandten Seite der Schenkel der optischen Messeinheit 3 angebracht werden. In soweit die Länge des Tastarms 422 und die Position der Schwenkachse 43 gegenüber der Rotationsachse 6 so gewählt wird, dass der taktile Messtasters 42 bei einer kreisbogenförmigen Einschwenkbewegung mit dem Tastelement 423 die Rotationsachse 6 tangieren kann (Fig. 2b), ist die Position der mechanischen Messeinheit 4 für die Durchführung der Messung nicht von Bedeutung. Durch die zuvor genannte Einschränkung ist gewährleistet, dass mit dem taktilen Messtaster 42 jede radiale Position des in die Werkstückhalterung 2 eingespannten Maschinenelements 5 erreicht werden kann.

Je nach Form und Lage der zu messenden, axial antastbaren Flächen kann die Geometrie der verwendeten Tastelemente 423 angepasst werden. Als ein besonders vorteilhaftes Tastelement 423 kann eine am Ende des Tastarms 422 angebrachte Tastkugel verwendet werden, mit der bereits eine Vielzahl von Messaufgaben an axial antastbaren Flächen durchgeführt werden können. Es können aber auch andere Tastelemente 423 wie beispielsweise Zylinder, Spitzen oder Scheiden verwendet werden, mit denen schwer zugängliche Flächen besser erreichbar sind.

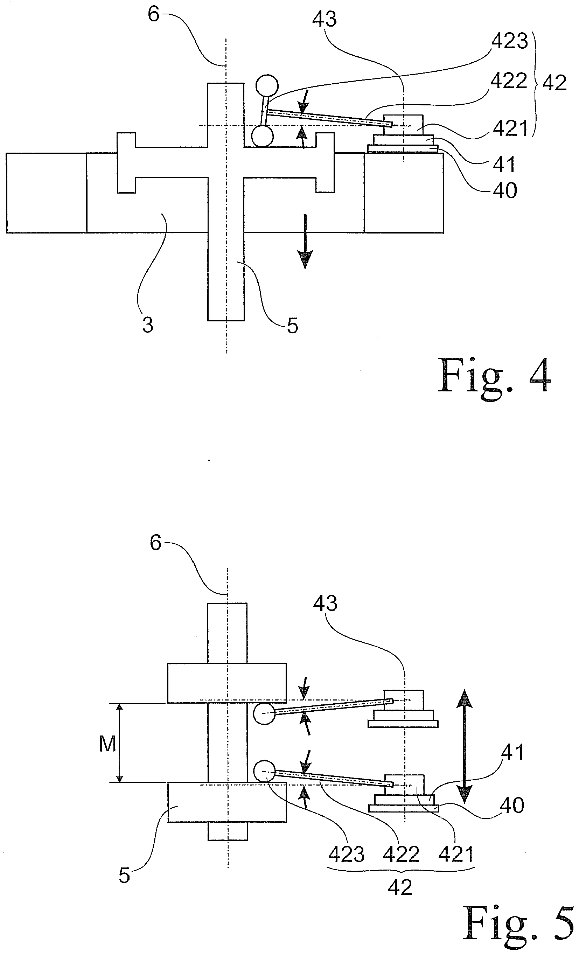

Für axial antastbare Flächen, die wie in Fig. 4 gezeigt, hinter äußeren Strukturen des Maschinenelements 5 liegen und nicht mit einem geraden Tastarm 422 mit Tastelement 423 erreichbar sind, kann eine spezielle Ausführung des Tastarms 422 verwendet werden. Dieser verfügt über zwei Tastelemente 423 in Form von Tastkugeln die mit einem Abstand zueinander, in Parallelrichtung zur Rotationsachse 6, am Ende des Tastarms 422 angeordneten sind.

Bei dem erfindungsgemäßen Verfahren zur Messung von Form-, Lage-, und Dimensionsmerkmalen wird in einem ersten Verfahrensschritt ein entsprechendes Maschinenelement 5 in eine drehbare Werkstückhalterung 2 eingespannt. Als drehbare Werkstückhalterung 2 können neben zwei Zentrierspitzen auch einseitige Spannmittel, wie Drei-, Vier- oder Sechsbackenfutter oder Spannzangen, verwendet werden. Bei den Maschinenelementen 5 kann es sich um Motor- und Getriebewellen, Schubstangen, Ventile, Kolben, Schrauben, Turbinenteile oder Ähnliches handeln, die fest in der Werkstückhalterung 2 aufgenommen werden, sodass sie um ihre Rotationsachse 6 gedreht werden können.

Im nachfolgenden Verfahrensschritt kann das Maschinenelement 5 optisch gemessen werden. Dazu werden mit einer optischen Messeinheit 3 Schattenbilder des Maschinenelements 5 erfasst. Die Schattenbilder werden in dem orthogonal zur Rotationsachse 6 gerichteten Strahlengang der optischen Messeinheit 3 erzeugt.

Bei der optischen Messung können abschnittsweise sowohl Konturen aufgezeichnet, indem die Rotationsachse 6 still steht und die Messeinheit 3 parallel zur Rotationsachse 6 bewegt wird als auch indem das Maschinenelement 5 um die Rotationsachse 6 rotiert wird, während die Messeinheit 3 an einer Position steht. Auf diese Weise können sehr schnell Form-, Lage- und Dimensionsmerkmale des Maschinenelements erfasst werden.

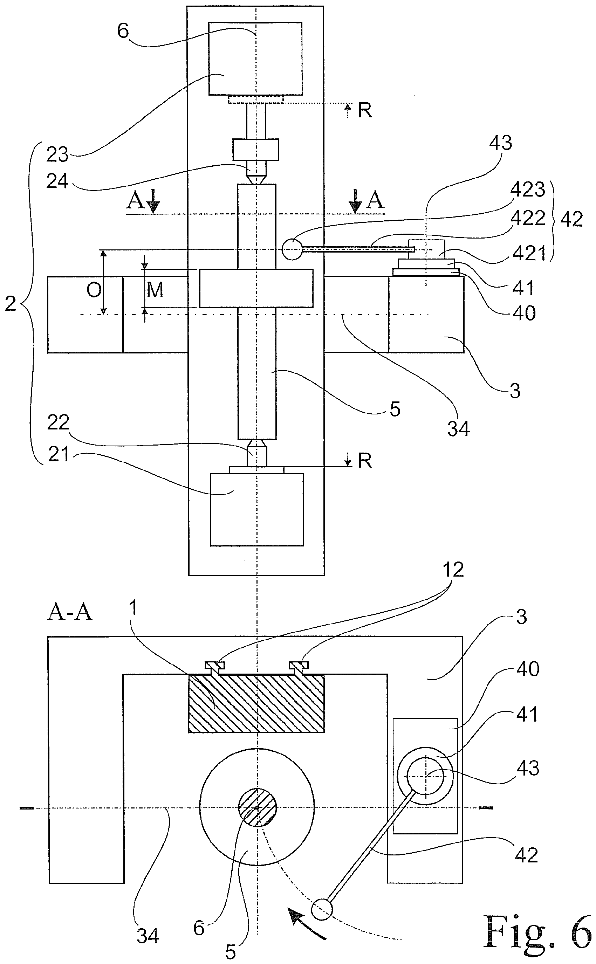

Aus der optischen Messung lassen sich auch leicht die Positionen von axial antastbaren Flächen des Maschinenelements 5 ermitteln. Entsprechend diesen optisch erfassten Positionen der axial antastbaren Flächen kann im nächsten Verfahrensschritt eine mechanische Messeinheit 4 mit einem taktilen Messtaster 42 zur Messung dieser Flächen positioniert werden. Die Positionierung erfolgt über eine Bewegung der optischen Messeinheit 3 entlang des Linearführungssystems 12 (nur in Fig. 6 gezeigt). Die optische Messeinheit 3 wird so positioniert, dass der taktile Messtaster 42 der mechanischen Messeinheit 4 kollisionsfrei in einer der zu messenden Fläche gegenüberliegenden Orthogonalebene in das Maschinenelement 5 eingeschwenkt werden kann.

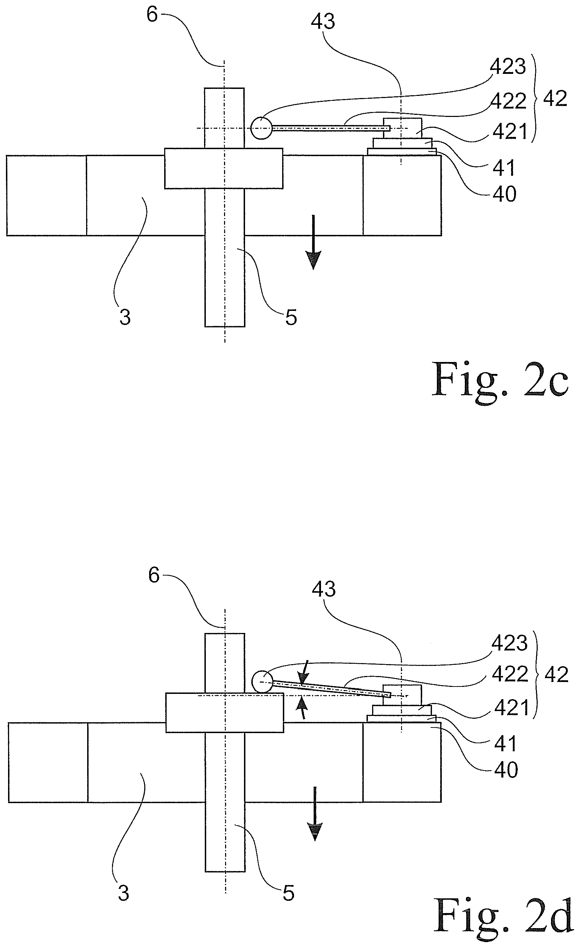

Im letzten Verfahrensschritt erfolgt die taktile Messung der axial antastbaren Flächen. Dazu wird der taktile Messtaster 42 aus einer außerhalb des Maschinenelements 5 liegenden Ausgangsposition in das Maschinenelement 5 eingeschwenkt (siehe Fig. 2b, 2c), bis eine gewünschte radiale Position gegenüber der Rotationsachse 6 erreicht ist in der durch eine Bewegung der optischen Messeinheit 3 die Antastung der zu messenden Fläche mit dem taktilen Messtaster 42 erfolgt.

Die Besonderheiten des Messens von Abstandswerten M zwischen zwei axial antastbaren Flächen eines Maschinenelements 5 sollen anhand von zwei Beispielen erläutert werden.

In einem ersten Beispiel erfolgt die Messung eines Abstandswerts M an zwei gegenüberliegenden Flächen, die durch Material des Maschinenelements 5 voneinander getrennt sind. Die Messung kann anhand der Fig. 2a bis Fig. 2d erläutert werden und erfolgt durch eine kombinierte Anwendung des optischen und des taktilen Messverfahrens. Der relevante Abschnitt des Maschinenelements 5 (in Fig. 2a bis 2d der Bereich des Maschinenelements 5 mit dem größeren Durchmesser und den beiden orthogonal zur Rotationsachse 6 orientierten Planflächen dieses Abschnitts) wird zunächst vollständig mit der optischen Messeinheit 3 erfasst. Aus dem aufgenommenen Schattenbild werden die Positionen der beiden axial antastbaren Flächen (Fig. 2a) erfasst. Anschließend wird der taktile Messtaster 42 mittels der optischen Messeinheit 3 zunächst in die aus der optischen Messung bekannte Orthogonalebene bewegt, die einer der axial antastbaren Flächen gegenüber liegt (in Fig. 2a die Fläche oberhalb des zu messenden Abschnitts des Maschinenelements 5) und der taktile Messtaster 42, wie in Fig. 2b gezeigt, in den Bereich des Maschinenelements 5 eingeschwenkt. Sobald der taktile Messtaster 42 gegenüber der Rotationsachse 6 eine gewünschte radiale Position erreicht hat, erfolgt, wie in Fig. 2c gezeigt, die Antastbewegung des taktilen Messtasters 42 mittels der optischen Messeinheit 3. Die Antastbewegung wird fortgesetzt, bis der taktile Messtaster 42 auf der axial antastbaren Fläche aufsetzt und wie in Fig. 2d gezeigt eine zur Erfassung des Messwerts erforderliche Auslenkung erreicht. Auf diese Weise können axiale Positionen gemessen werden, die aufgrund von verdeckten Flächenbereichen im Schattenbild oder nicht sichtbaren Elementen bzw. nicht ausreichend genau gemessen werden können.

Die Messung des Abstandswerts M der beiden Flächen aus dem obigen Beispiel kann auch erfolgen, indem die axiale Position einer Fläche taktil erfasst wird und die axiale Position der anderen Fläche optisch.

Ein zweites Beispiel ist in Fig. 5 gezeigt. Die zu messenden axial antastbaren Flächen liegen sich hier gegenüber und sind nur durch Luft voneinander getrennt. Zur Ermittlung der Position beider Flächen kann auch hier im Voraus eine schnelle optische Messung erfolgen. Bei der mechanischen Abstandswertmessung kann der taktile Messtaster 42 nun in eine beliebige Orthogonalebene zwischen den beiden Flächen des Maschinenelements 5 eingeschwenkt werden. Die Messung beider Flächen erfolgt durch eine Bewegung der optischen Messeinheit 3 in beide Richtungen parallel zur Rotationsachse 6, sodass an dieser radialen Position eine Fläche von unten und die andere Fläche von oben angetastet werden kann und für diese radiale Position ein Abstandswert M ermittelt wird. Da der taktile Messtaster 42 bei dieser Messung in einer unveränderten radialen Position verbleibt, können in diesem Fall Messfehler, die durch Schwenkbewegungen des taktilen Messtasters 42 entstehen könnten, ausgeschlossen werden, sodass ein sehr genaues Messergebnis erwartet zu erwarten ist.

Bei einer kombinierten optischen und mechanischen Messung zur vollständigen Erfassung des Maschinenelements 5 mit mehreren zu messenden Abschnitten mit axial antastbaren Flächen, kann sich der Ablauf wie nachfolgend beschrieben unterschiedlich gestalten.

Es besteht entweder die Möglichkeit, zunächst alle Abschnitte des Maschinenelements 5 im ersten Verfahrensschritt optisch zu messen. Das kann mit einer Bewegung der optischen Messeinheit entlang des Maschinenelements 5 erfolgen, bei dem ein sukzessive aufgenommenes Schattenbild des gesamten Maschinenelements 5 erfasst wird. Anschließend werden in weiteren Teilschritten des taktilen Messens alle relevanten Abschnitte nacheinander mit der mechanischen Messeinheit 4 angetastet und gemessen.

Alternativ besteht die Möglichkeit, das Maschinenelement 5 in nacheinander folgenden Verfahrensschritten abschnittsweise optisch und taktil zu messen. Nachdem ein erster Abschnitt des Maschinenelements 5 optisch und taktil erfasst wurde, werden die Messeinheiten 3 und 4 zum nachfolgenden Abschnitt bewegt und dieser Abschnitt vermessen, bis das Maschinenelement 5 vollständig erfasst ist.

Um eine sehr genaue Messung zu ermöglichen, ist es erforderlich vor oder auch während der Messung eines Maschinenelements 5 eine Kalibrierungen der Messeinheiten erforderlich. Die Einmessschritte müssen bei den beiden in den Beispielen genannten Verfahrensabläufen und auch bei allen anderen Variationen des Verfahrens durchgeführt werden. Der Ablauf des Einmessens richtet sich nach der Kombination der für die Messung der axial antastbaren Flächen verwendeten Messeinheiten.

In einer ersten Variante des Messverfahrens zur Messung axial antastbarer Flächen bei der die optische Messeinheit 3 und die mechanische Messeinheit 4 kombiniert verwendet werden, ist mindestens vor Beginn und gegebenenfalls auch noch während der Messung ein genauer Offset-Wert O zu ermitteln, der dem Abstandswert zwischen der optischen Achse 34 der optischen Messeinheit 3 und dem Tastelement 423 des taktilen Messtasters 42 entspricht. Wie in Fig. 6 gezeigt ist dazu eine Referenzfläche R erforderlich, die mit beiden Messeinheiten 3 und 4 angetastet werden kann. In Fig. 6 ist die Referenzfläche R in den Spindelstock 21 integriert. Die Abstandswertmessung soll erfolgen, indem die Referenzfläche R sowohl optisch als auch taktil erfasst wird. Aus der Differenz der beiden Messwerte kann dann der Offset-Wert O ermittelt werden. Insofern die Referenzfläche R sowohl mit der optischen Messeinheit 3 als auch mit der mechanischen Messeinheit 4 angetastet werden kann, ist die Position der Referenzfläche R nicht von Bedeutung. Deshalb kann sie, wie in Fig. 6 in einer gestrichelten Darstellung am Reitstock 23 gezeigt, alternativ auch an anderen Positionen der Werkstückhalterung 2 oder an fest dazu in Beziehung stehenden Flächen angeordnet sein.

In einer zweiten Variante des Messverfahrens zur Messung axial antastbarer Flächen, bei der gegenüberliegende axial antastbare Flächen die durch Luft voneinander beabstandet sind aus entgegengesetzten Richtungen angetastet werden sollen, ist die mindestens vor der Messung erforderliche Kalibrierung auf andere Weise vorzunehmen. Da bei dieser Abstandswertmessung die Antastung der beiden gegenüberliegenden axial antastbaren Flächen ausschließlich taktil erfolgen kann, ist ein Längennormal erforderlich das zwei Referenzflächen aufweist, die sich ebenfalls nur durch Luft getrennt gegenüberliegen.

Eine Ausführungsform des Längennormals ist, wie in Fig. 7 dargestellt, einseitig am Reitstock 23 ein U-Profil 7 angebracht, dessen innenliegende parallele Flächen die Referenzflächen R1 und R2 verkörpern. Durch zusätzliche optische Messung der beiden Referenzflächen R1 und R2 können Offset-Werte O (nur in Fig. 6 eingezeichnet) zwischen der optischen Messeinheit 3 und der mechanischen Messeinheit 4 für beide Antastrichtungen bestimmt werden.

Die beiden Referenzflächen R1 und R2 werden nacheinander mit dem taktilen Messtaster 42 angetastet und die ermittelten Messwerte als Längennormal gespeichert und zur Normierung der axialen Abstandsmesswerte des vom taktilen Messtaster 42 angetasteten Maschinenelements 5 verwendet. Unmittelbar danach kann die Anstandsmessung mit einer maximalen Genauigkeit durchgeführt werden. Die Normierung kann, falls erforderlich, auch beliebig oft während der Messung wiederholt werden.

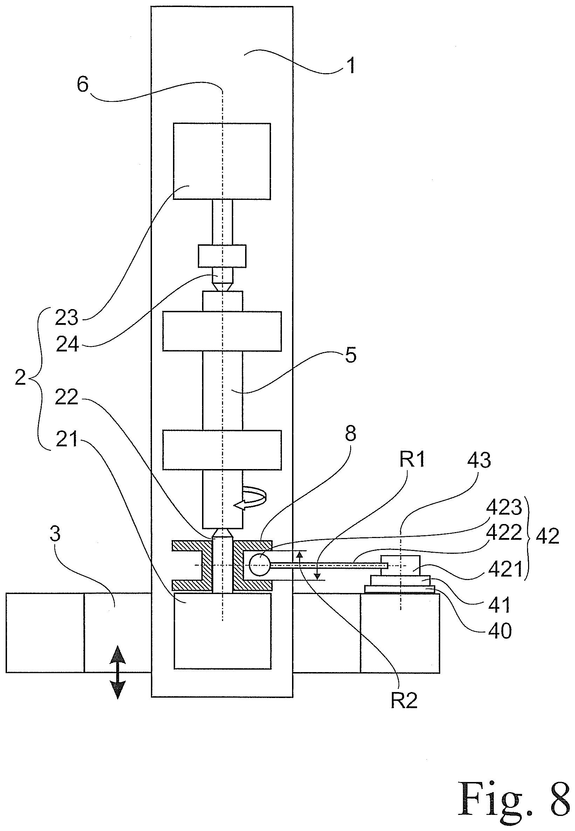

Eine weitere Ausführungsform des Längennormals ist in Fig. 8 dargestellt. Hier liegt das gleiche Prinzip zu Grunde wie bei dem in Fig. 7 beschriebenen U-Profil 7. In diesem Fall ist es als ein Rotationskörper 8 ausgeführt, der konzentrisch zur Rotationsachse 6 am Spindelstock 21 oder am Reitstock 23 umlaufend angebracht ist. Die beiden sich parallel gegenüberliegenden Referenzflächen R1 und R2 der Rechtecknut bilden dabei das Längennormal.

Eine weitere Steigerung der Genauigkeit kann erreicht werden, indem das gemessene Längennormal zwischen den Referenzflächen R1 und R2 in Abhängigkeit einer ermittelten Temperaturdifferenz des U-Profils 7 oder des Rotationskörpers 8 angepasst werden. Dazu wird die Temperatur von U-Profil 7 bzw.

Rotationskörper 8 mit Hilfe eines Temperatursensors (nicht gezeichnet) kontinuierlich erfasst und das gemessene Längennormal zwischen den Referenzflächen R1 und R2 mit einem Faktor korrigiert wird der dem der Temperaturänderung entsprechenden Wärmeausdehnungskoeffizienten berücksichtigt.

### Bezugszeichenliste

- 1: Maschinenbett
- 11: Linearführung
- 12: Linearführungssystem
- 2: Werkstückhalterung
- 21: Spindelstock
- 22: angetriebene Zentrierspitze
- 23: Reitstock
- 24: mitlaufende Zentrierspitze
- 25: Backenfutter
- 3: optische Messeinheit
- 31: Beleuchtungsmodul
- 32: Lichtbündel
- 33: Kameramodul
- 34: optische Achse
- 4: mechanische Messeinheit
- 40: Grundplatte
- 41: Schwenkeinrichtung
- 42: taktiler Messtaster
- 421: Messwertaufnehmer
- 422: Tastarm
- 423: Tastelement
- 43: Schwenkachse
- 5: Maschinenelement
- 6: Rotationsachse
- 7: kalibriertes Längennormal
- 8: Rotationskörper

- M: Abstandswert
- O: Offset-Wert zwischen optischer und mechanischer Messeinheit
- R / R1 / R2: Referenzfläche

## Patentansprüche

1. Vorrichtung zum Messen von Form-, Lage- oder Dimensionsmerkmalen eines rotierbaren Maschinenelements, enthaltend
- ein mechanisch stabiles Maschinenbett mit einer entlang des Maschinenbetts angeordneten Linearführung und einem parallel dazu angeordneten Linearführungssystem (12),
- eine Werkstückhalterung (2) zur drehbaren Aufnahme des Maschinenelements (5) um eine Rotationsachse (6) des Maschinenelements (5), wobei die Werkstückhalterung (2) mindestens ein in der Linearführung aufgenommenes Spannmittel aufweist, um die das Maschinenelement (5) um die Rotationsachse (6) drehbar ist,
- eine optische Messeinheit (3) mit einem Beleuchtungsmodul (31) und einem Kameramodul (33), die an einem Linearführungssystem (12) beweglich angeordnet ist und mit der von dem drehbar zwischen Beleuchtungsmodul (31) und gegenüberliegendem Kameramodul (33) angeordneten Maschinenelement (5) zweidimensionale Schattenbilder des Maschinenelements (5) aufnehmbar sind, wobei
- die optische Messeinheit (3) eine zusätzliche mechanische Messeinheit (4) mit einem taktilen Messtaster (42) zum Messen des Maschinenelements (5) in axialer Richtung aufweist, **dadurch gekennzeichnet, dass**
- die mechanische Messeinheit (4) an der optischen Messeinheit (3) fixiert ist und eine Schwenkeinrichtung (41) zum Einschwenken des taktilen Messtasters (42) in einer Orthogonalebene zur Rotationsachse (6) des Maschinenelements (5) aufweist.

2. Vorrichtung nach Anspruch 1, **dadurch gekennzeichnet, dass** der taktile Messtaster (42) einen eindimensionalen, in zwei Richtungen parallel zur Rotationsachse (6) des Maschinenelements (5) messenden Messwertaufnehmer (421) mit einem Tastarm (422) und mindestens einem Tastelement (423) aufweist, wobei der Tastarm (422) so lang ist, dass das mindestens eine Tastelement (423) beim Einschwenken des taktilen Messtasters (42) einen Kreisbogen beschreibt, der mindestens die Rotationsachse (6) des Maschinenelements (5) durchquert.

3. Vorrichtung nach Anspruch 2, **dadurch gekennzeichnet, dass** der taktile Messtaster (42) einen Tastarm (422) mit zwei in Parallelrichtung zur Rotationsachse (6) des Maschinenelements (5) beabstandeten Tastkugeln (423) aufweist, sodass von umgebendem Material verdeckte Flächen axial messbar sind.

4. Vorrichtung nach Anspruch 2, **dadurch gekennzeichnet, dass** die Schwenkeinrichtung (41) zur Positionierung der mindestens einen Tastkugel (423) des taktilen Messtasters (42) in einem auf die Rotationsachse (6) bezogenen Radius stufenlos einstellbar ist.

5. Vorrichtung nach einem der vorhergehenden Ansprüche, **dadurch gekennzeichnet, dass** der taktile Messtaster (42) durch Bewegung der optischen Messeinheit (3) entlang dem Linearführungssystem (12) in jeder axialer Position des Maschinenelements (5) positionierbar ist und eine Antastbewegung an axial antastbaren Flächen realisierbar ist.

6. Vorrichtung nach einem der vorhergehenden Ansprüche, **dadurch gekennzeichnet, dass** ein Kalibrierkörper (7; 8) zur Kalibrierung des taktilen Messtasters (42) in axialer Richtung der Rotationsachse (6) mindestens zwei zur Rotationsachse (6) orthogonale und sich axial gegenüberliegende Referenzflächen (R1, R2) aufweist und an der Werkstückhalterung (2) befestigt ist, wobei von dessen Referenzflächen (R1; R2) jeweils mindestens eine durch die optische Messeinheit (3) und durch die mechanische Messeinheit (4) abtastbar sind.

7. Vorrichtung nach Anspruch 6, **dadurch gekennzeichnet, dass** der Kalibrierkörper ein U-Profil (7) ist, das zwei parallele Innenflächen aufweist, die als Referenzflächen (R1; R2) orthogonal zur Rotationsachse (6) angeordnet sind.

8. Vorrichtung nach Anspruch 6, **dadurch gekennzeichnet, dass** der Kalibrierkörper ein zur Rotationsachse (6) konzentrisch angeordneter Rotationskörper (8) mit einer umlaufenden Rechtecknut ist, bei dem die sich parallel gegenüberliegenden Innenflächen der Rechtecknut die orthogonal zur Rotationsachse (6) angeordneten Referenzflächen (R1; R2) sind, wobei der Rotationskörper (8) konzentrisch an einem Spannmittel fixiert ist.

9. Vorrichtung nach einem der Ansprüche 6 bis 8, **dadurch gekennzeichnet, dass** die Temperatur des Kalibierkörpers (7; 8) mit Hilfe eines Temperatursensors erfasst und ein gemessenes Längennormal zwischen den Referenzflächen R1 und R2 unter Berücksichtigung der Temperaturabhängigkeit des Kalibrierkörpers (7; 8) unter Berücksichtigung seines Wärmeausdehnungskoeffizienten auf eine Bezugstemperatur korrigiert wird.

10. Verfahren zum Messen von Form-, Lage und Dimensionsmerkmalen an rotierbaren Maschinenelementen, mit den Schritten:
a) Einspannen eines Maschinenelements (5) in mindestens einem drehbaren Spannmittel einer Werkstückhalterung (2) zur Drehung des Maschinenelements (5) um eine Rotationsachse (6);
b) optisches Messen von Abschnitten des Maschinenelements (5) durch Erfassen von Schattenbildern in einem orthogonal zur Rotationsachse (6) gerichteten Strahlengang einer optischen Messeinheit (3) unter Rotation des Maschinenelements (5) um die Rotationsachse (6) zum Ermitteln von Form-, Lage-, und Dimensionsmerkmalen und von Positionen axial antastbarer Flächen aus den Schattenbildern;
c) Bewegen der optischen Messeinheit (3) zu den von der optischen Messeinheit (3) ermittelten Positionen axial antastbarerer Flächen des Maschinenelements (5) zum Positionieren einer mechanischen Messeinheit (4) mit taktilem Messtaster (42) entsprechend den optisch ermittelten Positionen von axial antastbaren Flächen;
d) taktiles Messen axialer Abstandswerte (M) von sich axial gegenüberliegenden Flächen des Maschinenelements (5) durch Einschwenken eines an die optische Messeinheit (3) gekoppelten taktilen Messtasters (42) in Orthogonalebenen, die den anzutastenden Flächen jeweils gegenüber liegen, durch Antasten dieser Flächen mit dem taktilen Messtaster (42).

11. Verfahren nach Anspruch 10, **dadurch gekennzeichnet, dass** das taktile Messen sich axial gegenüberliegender und durch Luft voneinander separierter Flächen derart erfolgt, dass Punkte der sich axial gegenüberliegenden Flächen, welche gleiche radiale Abstände von der Rotationsachse (6) aufweisen mit dem taktilen Messtaster (42) abwechselnd angetastet werden und für jeden gewählten radialen Abstand einen Längenmesswert darstellen, wobei der taktile Messtaster (42) zuvor an einem kalibrierten Längennormal (7) mit zwei sich parallel gegenüberliegenden, orthogonal zur Rotationsachse (6) ausgerichteten Referenzflächen (R) kalibriert wird.

12. Verfahren nach Anspruch 10, **dadurch gekennzeichnet, dass** das taktile Messen sich axial gegenüberliegender Flächen derart erfolgt, dass die axiale Position einer der Flächen mit der optischen Messeinheit (3) erfasst wird und die der anderen Fläche mit dem taktilen Messtaster (42), wobei zuvor die optische Messeinheit (3) und die mechanische Messeinheit (4) zueinander kalibriert werden, indem an einer Referenzfläche (R) ein Offset-Wert (O) zwischen den Messpositionen der optischen Messeinheit (3) und der mechanischen Messeinheit (4) bestimmt wird.

13. Verfahren nach Anspruch 10 **dadurch gekennzeichnet, dass** in einer oder mehreren zur Rotationsachse (6) konzentrischen Spuren Messwerte des taktilen Messtasters (42) aufgenommen und zur Berechnung von Formmerkmalen verwendet werden, wobei das Maschinenelement (5) um die Rotationsachse (6) gedreht wird.

14. Verfahren nach Anspruch 11, **dadurch gekennzeichnet, dass** das kalibrierte Längennormal (7) für wenigstens einen Kalibrierschritt mindestens vor Beginn des optischen Messens verwendet wird.

## Claims

1. Device for measuring shape, position or dimension features of a rotatable machine element, comprising
- a mechanically stable machine bed with a linear guide arranged along the machine bed and a linear guide system (12) arranged parallel to the linear guide,
- a workpiece holder (2) for receiving the machine element (5) so as to be rotatable around a rotational axis (6) of the machine element (5), wherein the workpiece holder (2) has at least one clamping means which is received in the linear guide and around which the machine element (5) is rotatable around the rotational axis (6),
- an optical measuring unit (3) having an illumination module (31) and a camera module (33) which is movably arranged at a linear guide system (12) and by which two-dimensional shadow images of the machine element (5) can be captured, this machine element (5) being rotatably arranged between the illumination module (31) and the oppositely located camera module (33), wherein
- the optical measuring unit (3) has an additional mechanical measuring unit (4) having a tactile measuring probe (42) for measuring the machine element (5) in axial direction, **characterized in that**
- the mechanical measuring unit (4) is fixed to the optical measuring unit (3) and has a swiveling device (41) for swiveling the tactile measuring probe (42) in an orthogonal plane relative to the rotational axis (6) of the machine element (5).

2. Device according to claim 1, **characterized in that** the tactile measuring probe (42) has a one-dimensional measured value transducer (421) which measures in two directions parallel to the rotational axis (6) of the machine element (5) and which has a probe arm (422) and at least one probing element (423), wherein the probe arm (422) has a length such that when the tactile measuring probe (42) swivels inward the at least one probing element (423) describes an arc that crosses at least the rotational axis (6) of the machine element (5).

3. Device according to claim 2, **characterized in that** the tactile measuring probe (42) has a probe arm (422) with two probe balls (423) which are spaced apart in parallel direction with respect to the rotational axis (6) of the machine element (5) so that surfaces which are hidden by surrounding material can be measured axially.

4. Device according to claim 2, **characterized in that** the swiveling device (41) for positioning the at least one probe ball (423) of the tactile measuring probe (42) is continuously adjustable in a radius with respect to the rotational axis (6).

5. Device according to one of the preceding claims, **characterized in that** the tactile measuring probe (42) can be positioned in every axial position of the machine element (5) through movement of the optical measuring unit (3) along the linear guide system (12), and a probing movement can be realized at axially probeable surfaces.

6. Device according to one of the preceding claims, **characterized in that** a calibrating body (7; 8) for calibrating the tactile measuring probe (42) in axial direction of the rotational axis (6) has at least two axially opposed reference surfaces (R1, R2) orthogonal to the rotational axis (6) and is fastened to the workpiece holder (2), wherein at least one of the reference surfaces (R1; R2) thereof can be sensed respectively by the optical measuring unit (3) and by the mechanical measuring unit (4).

7. Device according to claim 6, **characterized in that** the calibrating body is a U-profile (7) having two parallel inner surfaces which are arranged as reference surfaces (R1; R2) orthogonal to the rotational axis (6).

8. Device according to claim 6, **characterized in that** the calibrating body is a rotational body (8) which is arranged concentric to the rotational axis (6) and which has a circumferential rectangular groove, and the parallelly opposed inner surfaces of the rectangular groove are the reference surfaces (R1; R2) which are arranged orthogonal to the rotational axis (6), wherein the rotational body (8) is fixed concentrically at clamping means.

9. Device according to one of claims 6 to 8, **characterized in that** the temperature of the calibrating body (7; 8) can be detected by means of a temperature sensor, and a measured length standard between the reference surfaces R1 and R2 is corrected to a reference temperature taking into account the temperature dependence of the calibrating body (7; 8), taking into account the thermal expansion coefficient thereof.

10. Method for measuring shape, position and dimension features of rotatable machine elements, having the following steps:
a) clamping a machine element (5) into at least one rotatable clamping means of a workpiece holder (2) for rotation of the machine element (5) around a rotational axis (6);
b) optically measuring portions of the machine element (5) by acquiring shadow images in a beam path of an optical measuring unit (3), which beam path is directed orthogonal to the rotational axis (6), accompanied by rotation of the machine element (5) around the rotational axis (6) for determining from the shadow images shape, position and dimension features and positions of axially probeable surfaces;
c) moving the optical measuring unit (3) to the positions of axially probeable surfaces of the machine element (5), which positions are determined by the optical measuring unit (3), for positioning a mechanical measuring unit (4) with tactile measuring probe (42) corresponding to the optically determined positions of axially probeable surfaces;
d) tactilely measuring axial distance values (M) of axially opposed surfaces of the machine element (5) by swiveling a tactile measuring probe (42) coupled to the optical measuring unit (3) into orthogonal planes which are located opposite the surfaces to be probed by probing these surfaces with the tactile measuring probe (42).

11. Method according to claim 10, **characterized in that** the tactile measurement of axially opposed surfaces which are separated from one another by air is carried out in such a way that points of the axially opposed surfaces at the same radial distance from the rotational axis (6) are alternately probed by the tactile measuring probe (42) and represent a length measurement value for every selected radial distance, wherein the tactile measuring probe (42) is calibrated beforehand to a calibrated length standard (7) with two parallelly opposed reference surfaces (R) which are oriented orthogonal to the rotational axis (6).

12. Method according to claim 10, **characterized in that** the tactile measurement of axially opposed surfaces is carried out in such a way that the axial position of one of the surfaces is acquired by the optical measuring unit (3) and that of the other surface is acquired by the tactile measuring probe (42), wherein the optical measuring unit (3) and the mechanical measuring unit (4) are calibrated to one another beforehand **in that** an offset value (O) between the measuring positions of the optical measuring unit (3) and of the mechanical measuring unit (4) is determined at a reference surface (R).

13. Method according to claim 10, **characterized in that** measured values of the tactile measuring probe (42) are captured in one or more tracks concentric to the rotational axis (6) and are used to calculate shape features, wherein the machine element (5) is rotated around the rotational axis (6).

14. Method according to claim 11, **characterized in that** the calibrated length standard (7) for at least one calibrating step is used at least before the commencement of optical measurement.

## Revendications

1. Dispositif de mesure de caractéristiques de forme, de position ou de dimension d'un élément de machine rotatif, comprenant:
- une base de machine mécaniquement stable avec un guidage linéaire disposé le long de la base de machine et un système de guidage linéaire (12) disposé parallèlement au guidage linéaire,
- un support de pièce (2) pour recevoir l'élément de machine (5) de manière à pouvoir tourner autour d'un axe de rotation (6) de l'élément de machine (5), le support de pièce (2) ayant au moins un moyen de serrage qui est reçu dans le guidage linéaire et autour duquel l'élément de machine (5) peut tourner autour de l'axe de rotation (6),
- une unité de mesure optique (3) avec un module d'éclairage (31) et un module de caméra (33), qui est disposée de manière mobile sur un système de guidage linéaire (12) et au moyen de laquelle des images d'ombre à deux dimensions de l'élément de machine (5) peuvent être capturées, cet élément de machine (5) étant disposé de manière à pouvoir tourner entre le module d'éclairage (31) et le module de caméra (33) opposé,
- l'unité de mesure optique (3) ayant une unité de mesure mécanique (4) supplémentaire avec un palpeur de mesure tactile (42) pour mesurer l'élément de machine (5) dans la direction axiale, **caractérisé en ce que**
- l'unité de mesure mécanique (4) est fixée sur l'unité de mesure optique (3) et a un dispositif de pivotement (41) pour pivoter le palpeur de mesure tactile (42) dans un plan orthogonal par rapport à l'axe de rotation (6) de l'élément de machine (5).

2. Dispositif selon la revendication 1, **caractérisé en ce que** le palpeur de mesure tactile (42) a un transducteur de valeurs mesurées (421) à une dimension qui mesure dans deux directions parallèlement à l'axe de rotation (6) de l'élément de machine (5) et qui a un bras palpeur (422) et au moins un élément palpeur (423), le bras palpeur (422) étant si long que, quand le palpeur de mesure tactile (42) pivote vers l'intérieur, l'au moins un élément palpeur (423) décrit un arc qui passe à travers au moins l'axe de rotation (6) de l'élément de machine (5).

3. Dispositif selon la revendication 2, **caractérisé en ce que** le palpeur de mesure tactile (42) a un bras palpeur (422) avec deux billes palpeur (423) espacées dans la direction parallèle à l'axe de rotation (6) de l'élément de machine (5) de telle sorte que des surfaces cachées de matière environnante peuvent être mesurées axialement.

4. Dispositif selon la revendication 2, **caractérisé en ce que** le dispositif de pivotement (41) pour positionner la au moins une bille palpeur (423) du palpeur de mesure tactile (42) est ajustable de manière continue dans un rayon par rapport à l'axe de rotation (6).

5. Dispositif selon une des revendications précédentes, **caractérisé en ce que** le palpeur de mesure tactile (42) peut être positionné dans chaque position axiale de l'élément de machine (5) par déplacement de l'unité de mesure optique (3) le long du système de guidage linéaire (12), et un mouvement de palpage peut être réalisé au niveau de surfaces axialement palpables.

6. Dispositif selon une des revendications précédentes, **caractérisé en ce qu'**un corps de calibrage (7; 8) pour calibrer le palpeur de mesure tactile (42) dans la direction axiale de l'axe de rotation (6) a au moins deux surfaces de référence (R1, R2) qui sont orthogonales à l'axe de rotation (6) et s'opposent axialement et que le corps de calibrage (7; 8) est monté sur le support de pièce (2), au moins une des surfaces de référence (R1; R2) du corps de calibrage (7; 8) pouvant être palpée respectivement par l'unité de mesure optique (3) et par l'unité de mesure mécanique (4).

7. Dispositif selon la revendication 6, **caractérisé en ce que** le corps de calibrage est un profil en U (7) ayant deux surfaces intérieures parallèles qui sont disposées en tant que surfaces de référence (R1 ; R2) orthogonalement à l'axe de rotation (6).

8. Dispositif selon la revendication 6, **caractérisé en ce que** le corps de calibrage est un corps rotatif (8) qui est disposé de manière concentrique par rapport à l'axe de rotation (6) et qui a une rainure rectangulaire périphérique, et les surfaces intérieures parallèlement opposées de la rainure rectangulaire sont les surfaces de référence (R1; R2) qui sont disposées orthogonalement à l'axe de rotation (6), le corps rotatif (8) étant fixé de manière concentrique sur un moyen de serrage.

9. Dispositif selon une des revendications 6 à 8, **caractérisé en ce que** la température du corps de calibrage (7; 8) est détectée à l'aide d'un capteur de température, et un standard de longueur mesuré entre les surfaces de référence R1 et R2 est corrigé à une température de référence en tenant compte de la dépendance de température du corps de calibrage (7; 8), en tenant compte du coefficient de dilatation thermique du corps de calibrage (7; 8).

10. Procédé de mesure de caractéristiques de forme, de position et de dimension d'éléments de machine rotatifs avec les étapes:
a) enserrer un élément de machine (5) dans au moins un moyen de serrage rotatif d'un support de pièce (2) pour la rotation de l'élément de machine (5) autour d'un axe de rotation (6);
b) mesurer optiquement des parties de l'élément de machine (5) en acquérant des images d'ombre dans un trajet de faisceau d'une unité de mesure optique (3), le trajet de faisceau étant dirigé orthogonalement à l'axe de rotation (6), accompagné d'une rotation de l'élément de machine (5) autour de l'axe de rotation (6) pour déterminer à partir des images d'ombre des caractéristiques de forme, de position et de dimension et des positions de surfaces axialement palpables;
c) déplacer l'unité de mesure optique (3) vers les positions de surfaces axialement palpables de l'élément de machine (5), les positions étant déterminées par l'unité de mesure optique (3), pour positionner une unité de mesure mécanique (4) avec un palpeur de mesure tactile (42) selon les positions optiquement déterminées de surfaces axialement palpables;
d) mesurer de manière tactile des valeurs de distance axiales (M) de surfaces axialement opposées de l'élément de machine (5) par pivotement d'un palpeur de mesure tactile (42) couplé à l'unité de mesure optique (3) dans des plans orthogonaux qui se trouvent opposés aux surfaces à palper en palpant ces surfaces avec le palpeur de mesure tactile (42).

11. Procédé selon la revendication 10, **caractérisé en ce que** la mesure tactile de surfaces axialement opposées et séparées les unes des autres par l'air est effectuée de telle manière que des points des surfaces axialement opposées à la même distance radiale de l'axe de rotation (6) sont palpées de manière alternante avec le palpeur de mesure tactile (42) et représentent un valeur de mesure de longueur pour chaque distance radiale sélectionnée, le palpeur de mesure tactile (42) étant calibré au préalable à un standard de longueur calibré (7) avec deux surfaces de référence (R) parallèlement opposées qui sont orientées orthogonalement à l'axe de rotation (6).

12. Procédé selon la revendication 10, **caractérisé en ce que** la mesure tactile de surfaces axialement opposées est effectuée de telle manière que la position axiale d'une des surfaces est détectée par l'unité de mesure optique (3) et celle de l'autre surface est détectée par le palpeur de mesure tactile (42), l'unité de mesure optique (3) et l'unité de mesure mécanique (4) étant calibrées l'une à l'autre au préalable en déterminant une valeur de décalage (O) entre les positions de mesure de l'unité de mesure optique (3) et de l'unité de mesure mécanique (4) à une surface de référence (R).

13. Procédé selon la revendication 10, **caractérisé en ce que** des valeurs mesurées du palpeur de mesure tactile (42) sont capturées dans une ou plusieurs traces concentriques par rapport à l'axe de rotation (6) et sont utilisées pour le calcul de caractéristiques de forme, l'élément de machine (5) étant tourné autour de l'axe de rotation (6).

14. Procédé selon la revendication 11, **caractérisé en ce que** le standard de longueur calibré (7) pour au moins une étape de calibrage est utilisé au moins avant le début de la mesure optique.
